# FASCICULE DE BREVET EUROPEEN

(11) **EP 2 823 701 B1**
(45) Date de publication et mention de la délivrance du brevet: **02.12.2020**
(21) Numéro de dépôt: 14175051.3
(22) Date de dépôt: 30.06.2014
(51) Int. Cl.: A01C 7/20

(54) **Elément semeur à poignée de réglage de la pression de terrage**
Säelement mit Griff zum Einstellen des Sädrucks
Seeder element with handle for adjusting the soil pressure

(30) Priorité: 12.07.2013 FR 1356916; 24.07.2013 FR 1357322
(43) Date de publication de la demande: 14.01.2015
(73) Titulaire: Sulky Burel, 35220 Chateaubourg (FR)
(72) Inventeur: Pertue, Loïc, 35113 Domagne (FR); Leveille, Lionel, 35500 Vitre (FR); Clochard, Daniel, 35113 Domagne (FR)
(74) Mandataire: Vidon Brevets & Stratégie

(56) Documents cités:
- EP-A1- 1 483 952
- EP-A2- 0 155 692
- WO-A1-2012/149367
- US-A- 5 529 128
- US-A- 6 068 061

## Description

### 1. domaine de l'invention

Le domaine de l'invention est celui des machines agricoles, et plus précisément des dispositifs de mise en terre de produits tels que graines, engrais ou produits phytosanitaires, solides, liquides ou gazeux. L'invention s'applique ainsi aux semoirs à grains.

Plus précisément encore, l'invention concerne la mise en pression, et le réglage de cette mise en pression, d'un élément semeur, monté sur un parallélogramme.

On discute essentiellement, par la suite, des semoirs à grains. Les mêmes explications et commentaires s'appliquent également pour la mise en terre d'autres produits.

Les semoirs à grains se présentent généralement sous la forme d'un ensemble d'éléments semeurs généralement identiques, montés parallèlement les uns aux autres sur un châssis de semoir, et définissant chacun une ligne de semis. Chaque élément semeur est apte à incorporer des graines, et le cas échéant un engrais associé, dans le sol. Il met en œuvre un parallélogramme déformable, permettant de suivre les variations de surface du sol.

### 2. art antérieur

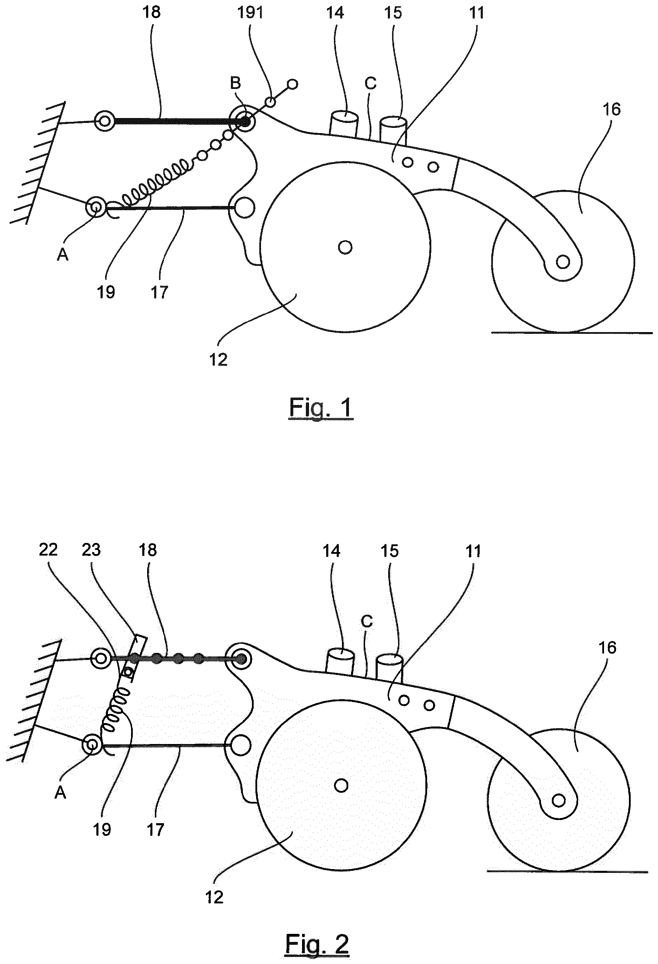

Un exemple d'élément semeur selon l'art antérieur est illustré sur la figure 1. L'élément semeur comprend une structure de support d'un outil de mise en terre. Dans le mode de réalisation de la figure 1, le support d'outil est un porte-disques 11 portant au moins un disque semeur 12, dans lequel les graines et l'engrais sont distribués, pour être ensuite placés dans le sol. La structure porte-disques 11 présente, en partie supérieure, un tube 14 d'arrivée des graines et un tube 15 d'arrivée de l'engrais, destinés à être reliés à des moyens d'amené des graines et de l'engrais. Selon d'autres modes de réalisation, les outils peuvent être des dents, creusant un sillon dans la terre, à la place du ou des disques. Bien que l'on décrive par la suite un élément semeur à disque(s), il est clair que la même approche peut s'appliquer à d'autres outils de mise en terre, et notamment à des dents.

Le porte-disques 11 peut également supporter, à l'arrière du ou des disques semeurs 12, une roulette de contrôle 16, assurant le contrôle de la profondeur à laquelle les graines sont placées et/ou le recouvrement de celles-ci. La roulette de contrôle 16 est solidarisée au porte-disques 11 par l'intermédiaire d'un bras de roulette.

L'élément semeur est relié au châssis du semoir par l'intermédiaire de deux bielles, une bielle inférieure 17 et une bielle supérieure 18, dont l'une des extrémités est montée mobile en rotation sur le porte-disques 11 et dont l'autre extrémité est montée mobile en rotation sur le châssis, de façon à définir sensiblement un parallélogramme déformable.

Ce parallélogramme déformable permet d'assurer, via la roulette de contrôle 16 qui roule sur la surface du sol, une profondeur des disques semeurs, et donc une profondeur d'enfouissement des graines, sensiblement constantes. Il est en effet important que cette profondeur d'enfouissement soit maîtrisée et homogène, en fonction du type de graine, malgré les variations, ou dénivellations, ponctuelles (creux ou bosses) de la surface du sol. C'est le parallélogramme déformable défini par les deux bielles 17 et 18 qui autorise ces variations de hauteur, par rapport au châssis.

Il est par ailleurs nécessaire que l'élément semeur imprime une pression suffisante sur le sol, pour que les disques semeurs pénètrent de façon suffisante et homogène dans le sol. La pression nécessaire est cependant variable, en fonction du type de sol rencontré. Ainsi, une pression faible est souhaitable, lorsque l'on sème sur un sol souple, en terre dite légère. Inversement, une pression forte est requise, si le sol est dur.

Pour permettre le contrôle de cette pression, les éléments semeurs de l'art antérieur sont équipés d'un ressort de tension réglable 19, monté à l'intérieur du parallélogramme déformable. Ce ressort 19 relie deux points A et B du parallélogramme, correspondant généralement à deux angles de celui-ci. Pour modifier la pression, on modifie la tension de ce ressort. Plus précisément, on augmente la pression de l'élément semeur en augmentant la tension du ressort 19, et on diminue la pression en diminuant la tension du ressort.

Pour ceci, une extrémité du ressort 19 est équipée d'une pièce de réglage 191 présentant plusieurs éléments d'accrochage au point B. Il peut notamment s'agir d'une biellette de réglage, prenant par exemple la forme d'une chaînette 110, dont chaque maillon peut être accroché au point B, ou d'un fer plat présentant une pluralité de perçages. On comprend que, selon le maillon ou le perçage sélectionné, le ressort 19 est plus ou moins tendu.

Selon une autre approche, le ressort peut être déplacé par rapport au parallélogramme, comme illustré par exemple par la figure 2. Un élément de préhension 21 est relié à la partie supérieure 22 du ressort 19, et déplacé le long de la bielle supérieure 18, pour obtenir le réglage souhaité.

Le document EP 1483 952 décrit un élément de machine agricole comportant un dispositif de ce type. Des autres éléments semblables sont connus de US 5 529 128, EP 0 155 692 et US 6 068 061.

### 3. inconvénients de l'art antérieur

Le réglage de tension selon la première approche, effectué par exemple via un goupillage de la biellette de réglage à l'axe B, est souvent difficile et long, du fait de la faible accessibilité sur la machine et du nombre important de lignes de semis sur un semoir. Il est en outre nécessaire, au moins dans certaines positions, de tendre fortement le ressort, pour l'amener dans la position voulue, ou le décrocher de la position précédemment sélectionnée, ce qui est peu aisé.

De plus, dans le cas particulier d'une chaînette, l'extrémité libre de cette dernière retombe par gravité, et risque de s'accrocher de façon intempestive à d'autres éléments, ou d'accrocher des débris végétaux présents dans le sol. La biellette de réglage peut également souffrir, dans le temps, de l'alternance de travail en traction / compression.

En outre, un inconvénient majeur de cette technique est qu'elle n'est pas toujours efficace, en particulier pour les réglages en faible tension du ressort 19. En effet, lorsque l'on veut augmenter l'effort de pression de l'élément semeur sur le sol, on choisit une position d'accrochage augmentant la tension du ressort.

Par ailleurs, la pièce de réglage 191 doit être très solide (par exemple une biellette percée d'ouvertures correspondant aux différentes positions de réglage) pour supporter en permanence les efforts de traction appliqués par le ressort, lorsque le parallélogramme travaille.

La seconde approche permet généralement un réglage plus aisé. Cependant, elle nécessite des moyens relativement complexes, renforcés et donc coûteux.

En effet, de la même façon, la traction permanente appliquée sur l'élément de préhension, et les efforts parfois violents transmis par les disques, par exemple lorsqu'ils rencontrent une pierre, imposent actuellement des solutions complexes pour être pérennes et fiables.

En outre, sauf à prévoir des montages relativement complexes, ces techniques de l'art antérieur posent généralement des problèmes de corrosion, dus à des frottements de l'extrémité du ressort et/ou de pièces métalliques de fixation telles que des chaines contre les éléments du parallélogramme.

### 4. objectifs de l'invention

L'invention a notamment pour objectif de pallier au moins certains de ces inconvénients de l'état de l'art.

Plus précisément, un objectif de l'invention est, selon au moins un mode de réalisation, de fournir une nouvelle technique de réglage de la pression de terrage, qui soit simple à mettre en œuvre et efficace.

Un objectif particulier de l'invention est ainsi de fournir une telle technique, qui soit fiable et ergonomique, et qui permet un réglage rapide, avec un nombre de manipulations réduites.

Un autre objectif de l'invention est, selon au moins un mode de réalisation, de permettre une manipulation pour l'opérateur ne nécessitant qu'un effort relativement faible.

L'invention a également pour objectif de fournir une telle technique, qui soit peu coûteuse.

Un autre objectif de l'invention est, selon au moins un mode de réalisation, de proposer une solution permettant de supprimer, ou à tout le moins réduire, les phénomènes de corrosion.

### 5. présentation de l'invention

Ces objectifs, ainsi que d'autres qui apparaîtront par la suite, sont atteints à l'aide d'un élément semeur, destiné à être solidarisé au châssis d'un semoir mettant en œuvre une pluralité d'éléments semeurs, selon la revendication 1.

Ainsi, la poignée travaille en compression (lorsqu'un utilisateur n'agit pas sur celle-ci), et non en permanence en traction. On obtient ainsi un système simple, efficace et plus fiable.

Le fait que ladite bielle supérieure définit sensiblement un arc de cercle dont le centre de rotation se situe à proximité de l'axe orienté vers l'avant de ladite bielle inférieure permet d'offrir une bonne ergonomie, l'effort à appliquer au ressort pour dégager la poignée étant sensiblement le même, quel que soit le point d'ancrage concerné.

Selon une caractéristique particulière, ladite poignée peut présenter au moins un flanc de protection apte à s'étendre sur au moins une partie de la largeur de ladite bielle supérieure.

Ceci permet, notamment, de lutter efficacement contre la corrosion due généralement aux frottements métal contre métal, et, selon les cas, de faciliter le guidage du ressort d'un point d'ancrage vers un autre.

Selon un mode de réalisation particulier, ladite poignée est réalisée essentiellement en matière plastique.

Ceci est rendu possible du fait que la poignée travaille en compression, et que les sollicitations sont en conséquence plus faibles que dans les systèmes de l'art antérieur. Il est ainsi possible de proposer une poignée ergonomique et agréable.

Selon un aspect particulier, ladite extrémité supérieure dudit ressort de traction peut présenter une portion rectiligne, selon l'axe dudit ressort, d'une longueur sensiblement supérieure à la largeur de ladite bielle supérieure.

A nouveau, ceci permet de réduire les frottements entre le ressort et la bielle, et d'optimiser les dimensions et l'encombrement du système.

Selon une autre caractéristique particulière, lesdits points d'ancrage peuvent être des encoches formées dans ladite bielle supérieure.

Cette approche est à la fois très simple à mettre en œuvre, et efficace.

Dans ce cas, ladite portion de réception de la poignée peut présenter une forme extérieure complémentaire d'une desdites encoches.

Notamment, cette forme peut être adaptée pour que la poignée se trouve toujours dans une même position par rapport à la bielle, alors que l'extrémité du ressort est mobile en rotation par rapport à la poignée.

Il est ainsi toujours aisé de saisir la poignée.

Selon un mode de réalisation particulier, ladite bielle inférieure peut comprendre au moins deux points d'ancrage d'une seconde extrémité dudit ressort de traction.

Notamment, au moins un desdits points d'ancrage peut permettre un travail du ressort en soulagement.

Selon un autre mode de réalisation particulier, ledit élément semeur peut être solidarisé audit châssis par une liaison pivot, le point de rotation étant placé en arrière dudit parallélogramme déformable.

Notamment, ce point de rotation peut être placé à proximité d'une verticale passant par l'axe des disques (ou de la dent, dans le cas où le porte-outil porte une dent), en particulier à ± 5 cm de cette verticale.

Ceci permet que le réglage de la profondeur de travail n'influe pas, ou peu, sur la géométrie du parallélogramme déformable. Cet aspect peut, dans certains cas, être mis œuvre indépendamment d'un système de poignée tel que décrit précédemment.

### 6. liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1, déjà commentée en préambule, illustre, schématiquement, un élément semeur selon l'art antérieur ;
- la figure 2, également commentée en préambule, illustre une autre approche du réglage d'un élément semeur selon l'art antérieur ;
- la figure 3 illustre, schématiquement, un élément semeur selon l'invention ;
- la figure 4 présente la poignée de réglage de l'élément semeur de la figure 3 ;
- la figure 5 présente le ressort de l'élément semeur de la figure 3 ;
- les figures 6A et 6B illustrent un mode de réglage de la profondeur, selon un mode de réalisation de l'invention ;
- la figure 7 illustre l'élément semeur de la figure 3 dans une position de fonctionnement en soulagement ;
- la figure 8 illustre une variante de l'invention, dans laquelle l'élément semeur est une dent.

### 7. description de modes de réalisation

### 7.1 poignée de réglage

L'invention propose donc une approche particulièrement simple et efficace du réglage de la pression de terrage, mettant en œuvre une poignée de réglage particulière, travaillant en compression, et non en permanence en traction, comme ceci est le cas dans les dispositifs de l'art antérieur.

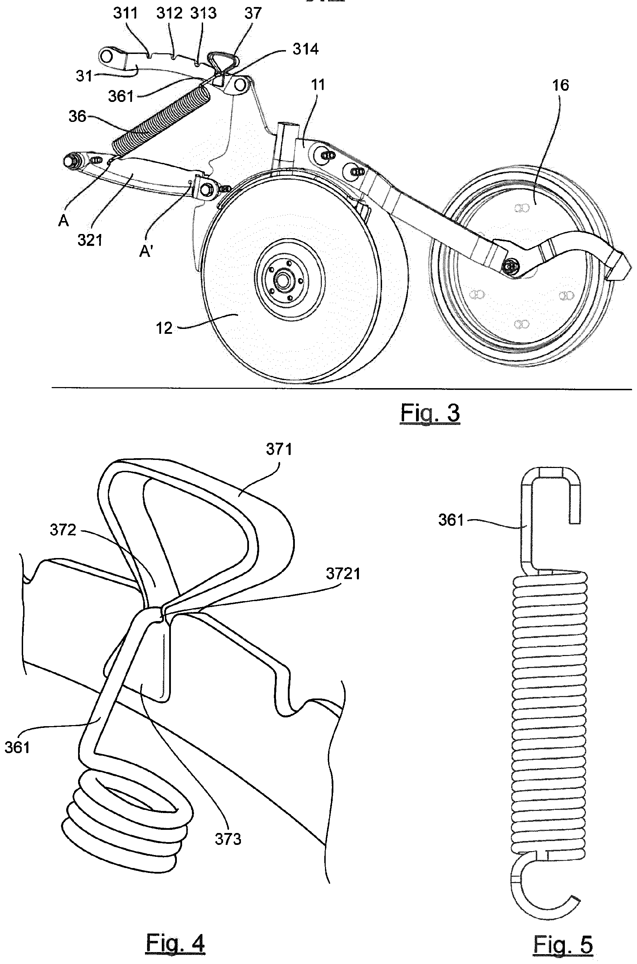

La figure 3 illustre schématiquement un élément semeur mettant en œuvre l'invention. Comme mentionné en préambule, un parallélogramme déformable, comprenant notamment une bielle supérieure 31 et une bielle inférieure 32 permettent de suivre le mouvement des disques 16.

Un ressort de traction 36 est monté entre les bielles supérieure 31 et inférieure 32. Pour contrôler la pression de terrage, l'extrémité supérieure 361 du ressort de traction 36 peut prendre plusieurs positions le long de la bielle supérieure 31.

Selon ce mode de réalisation, ces différentes positions correspondent à plusieurs points d'ancrage, définit par des encoches 311 à 314. Ces encoches sont, dans ce mode de réalisation, formées directement dans la masse de la bielle supérieure 31, par exemple par moulage ou découpe laser.

Le changement de pression de terrage se fait donc par déplacement de la partie supérieure 361 du ressort d'une encoche vers une autre. Selon l'invention, ceci est possible sans outil, et sans opération complexe, notamment sans opération de déverrouillage d'une goupille ou de tout autre élément de sécurité. Il suffit en effet de manipuler la poignée 37 prévue à cet effet. Comme détaillé ci-après, cette manipulation est aisée, notamment lorsque, dans certains modes de réalisation, on met en œuvre une bielle supérieure incurvée.

Cette poignée 37 comprend, comme on le voit sur la figure 3, une portion de préhension 371, permettant le passage d'un ou plusieurs doigts pour la soulever (en appliquant une traction sur le ressort) puis la déplacer le long de la bielle 31, vers une autre encoche.

Selon l'invention, cette poignée 37 comprend également une portion de réception 372 de l'extrémité supérieure 361. Cette portion de réception 372 est conçue de façon à être « prise en sandwich » entre le crochet formé à l'extrémité supérieure 361 du ressort et le fond de l'encoche 312. Ainsi, la poignée 37 est en permanence (en l'absence d'action d'un utilisateur sur la partie de préhension 371) maintenue plaquée dans l'encoche par le ressort 36, agissant en compression sur cette poignée.

Le travail en compression, et non en traction, permet d'optimiser le dimensionnement de la pièce formant la poignée 37, et par conséquent de la réaliser en matière plastique (le cas échéant renforcée par une âme métallique). Cette poignée peut ainsi être aisément configurée pour s'adapter d'une part à la forme des encoches 311 à 314 et d'autre part à une manipulation par l'utilisateur. Ceci lui confère une forme particulièrement ergonomique, simple et agréable à manipuler.

La figure 4 illustre plus précisément un exemple d'une telle poignée.

La forme de la portion de préhension 371 peut être adaptée pour permettre une manipulation aisée, par exemple en définissant l'emplacement des doigts.

Comme précisé précédemment, la portion de réception 372 est configurée pour épouser la forme d'une des encoches 311 à 314. Avantageusement, cette portion de réception comprend d'une part un logement 3721 pour recevoir le fil du ressort (s'étendant sensiblement perpendiculairement à l'axe du ressort sur cette portion, comme illustré par la figure 4), par exemple par clippage. Le fil du ressort peut être libre en rotation, dans ce logement, pour suivre les mouvements dus au débattement du parallélogramme pendant le travail, sans détériorer la poignée.

Elle peut également présenter une forme facilitant le guidage et le maintien dans les encoches. Par exemple, des retours latéraux peuvent permettre un guidage dans les encoches de la bielle, voire vers une encoche de la bielle, si la poignée est relâchée entre deux encoches.

Par ailleurs, la poignée présente avantageusement des flancs 373 de protection (ou au moins un flanc) venant s'étendre le long d'au moins une partie de la surface latérale de la bielle 31. La fonction principale de ces flancs 373 est d'assurer une isolation efficace entre la bielle 31 et l'extrémité 361 du ressort.

Ainsi, la poignée de l'invention assure une isolation entre le ressort et la bielle, évitant tout problème de corrosion dû au frottement métal sur métal de la partie supérieure du ressort contre la bielle.

Plus précisément, la partie de réception 372 assure une isolation au niveau de l'encoche, et le ou les flancs latéraux assurent une isolation complémentaire, si nécessaire, au niveau de la largeur de la bielle. Ceci peut ne pas être nécessaire, dans certains cas, notamment si la portion de réception 372 est suffisamment large pour éloigner suffisamment l'extrémité supérieure du ressort de la bielle.

Comme illustré par la figure 5, le ressort 36 est un ressort hélicoïdal, présentant avantageusement, en sa partie supérieure 361, une portion 51, rectiligne selon l'axe du ressort. Cette portion 51 se termine par un crochet 52, destiné à coopérer avec la portion de réception 372 de la poignée.

La partie rectiligne présente une longueur sensiblement supérieure à la largeur de la bielle 31, pour que les spires 53 n'entrent pas en contact avec cette bielle 31 (la partie rectiligne 51 vient en contact avec le flanc 373 de la poignée). Une longueur supplémentaire permet le débattement nécessaire, lorsque la poignée 37 est soulevée par un utilisateur.

Comme on le constate sur le mode de réalisation illustré par la figure 3, la bielle supérieure 31 est ici légèrement incurvée, vers le haut (le parallélogramme étant donc convexe, au niveau de cette bielle supérieure) pour optimiser le rapport entre l'allongement du ressort et la direction de celui-ci.

Cette forme permet notamment d'obtenir, dans toute les positions de réglage une extension minimale du ressort, et donc un contact permanent de la poignée avec la bielle. Cela permet également d'avoir un effort sensiblement constant du ressort dans toutes les positions au moment du réglage, ce qui contribue à l'ergonomie du système. En effet, un système où les positions extrêmes sont difficiles à atteindre et/ou nécessite un effort important est peu ergonomique. Cette approche apporte une réponse à ce problème particulier.

L'invention peut cependant être mise en œuvre avec toute forme de bielle, et notamment une bielle rectiligne.

Par ailleurs, optionnellement la position de l'extrémité inférieure 362 du ressort peut également être modifiée, par exemple entre le point A et le point A', pour permettre un fonctionnement en pression (point A) ou en soulagement (point A').

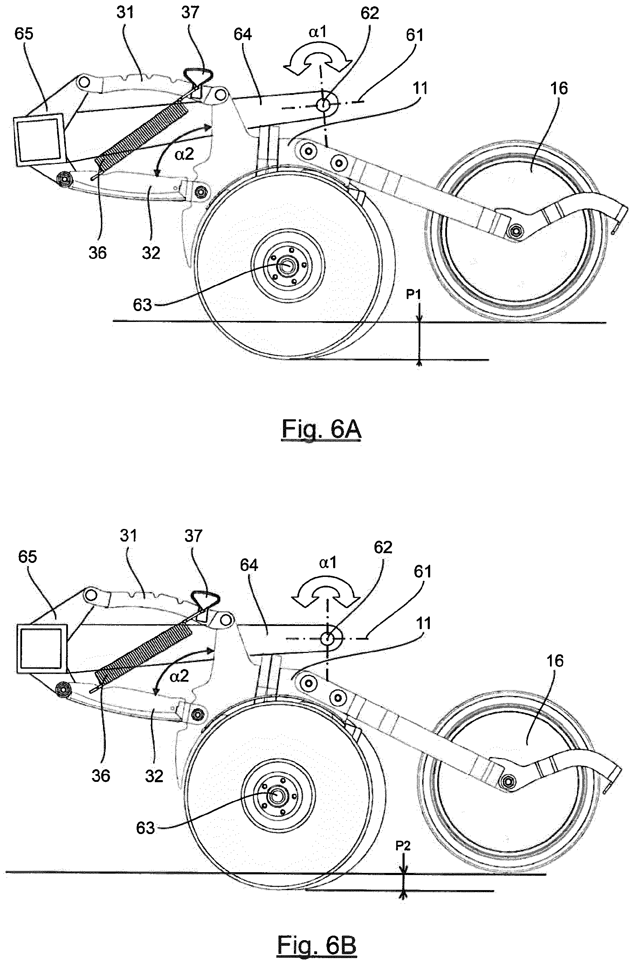

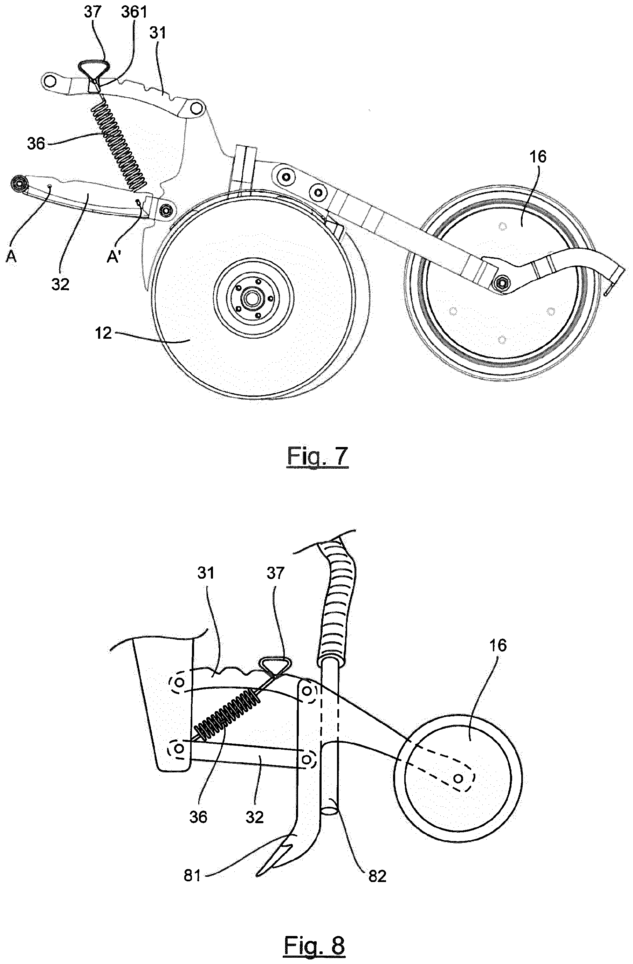

La figure 7 illustre le porte-disque des figures 6A et 6B dans une position de fonctionnement en soulagement. L'extrémité 362 du ressort 36 a été déplacée sur la bielle inférieure 32, vers le point A'. Dans cette position, il est également possible de déplacer la poignée 37, et donc l'extrémité 361 du ressort, le long de la bielle supérieure 31.

### 7.2 outil à dent

Le mode de réalisation décrit précédemment s'appuie sur l'utilisation de disques pour assurer les semis. Comme indiqué précédemment, l'invention peut être mise en œuvre avec d'autres types d'outils, et notamment, comme illustré par la figure 8, l'invention avec des dents 81, creusant un sillon en avant d'un tube 82 distribuant les graines à semer.

Le système de l'invention est similaire à celui décrit précédemment, et n'est donc pas décrit à nouveau.

### 7.3 réglage de la profondeur

Selon un autre aspect, un réglage particulier de la profondeur est proposé. En effet, outre le réglage de la pression de terrage, il est nécessaire de régler la profondeur à laquelle les disques semeurs 12 doivent pénétrer dans le sol, en fonction notamment du type de graine à semer. Pour ceci, il est possible de mettre en œuvre divers systèmes de l'art antérieur, qui sont compatibles avec l'approche de l'invention.

Selon un mode de réalisation particulier, illustré par les figures 6A et 6B, un réglage nouveau et inventif est proposé, consistant à mettre en œuvre une rotation de l'ensemble comprenant les bielles 31, 32, le porte-disque 11 et la roue 16 autour d'un point 62 situé assez nettement en arrière des bielles du parallélogramme (l'arrière étant définie par l'orientation avant-arrière du tracteur portant le semoir), et de préférence à proximité de la verticale de l'axe 63 des disques (notamment dans une plage de ± 5 cm par rapport à cette verticale) et sensiblement dans la même zone de hauteur que la bielle supérieure.

Pour ceci, un élément de liaison 64 est prévu, entre une pièce 65, reliant les extrémités orientées vers l'avant des deux bielles, et le point de rotation 62 solidaire du châssis du tracteur, par une liaison pivot.

Cette position du point de rotation 62 permet, pour des réglages de rotation α1 différents, de ne pas faire varier de façon importante l'angle α2 entre les bielles et le porte-disque. On ne modifie ainsi pas fortement la géométrie du parallélogramme suivant le réglage de profondeur de travail. La butée basse de la ligne de semis ne se trouve pas non plus fortement modifiée par le réglage de profondeur.

Comme on peut le constater sur les figures 6A et 6B, on obtient des profondeurs différentes P1 et P2, en modifiant la position de l'élément 64 par rapport au châssis, en changeant l'angle α1. Ainsi, sur la figure 6B, l'élément 64 s'étend sensiblement horizontalement (axe A), pour une profondeur P2. Sur la figure 6A, l'axe A est incliné vers l'avant et vers le bas, ce qui entraîne un relèvement de la roue, et donc une profondeur P2 plus importante. Cependant, l'angle a2 est resté pratiquement inchangé, entre les deux positions.

Inversement, un point de rotation 62 situé plus près des bielles (ou pire encore situé devant celles-ci) impacterait fortement sur l'angle α2 et la géométrie du parallélogramme, ce qui nécessiterait, au moins dans certains cas, de compenser la butée basse.

## Revendications

1. Elément semeur, destiné à être solidarisé au châssis d'un semoir mettant en œuvre une pluralité d'éléments semeurs, ledit élément semeur présentant une structure porte-outil (11) portant au moins un outil semeur (12),
ladite structure porte-outil (11) étant reliée audit châssis par l'intermédiaire de deux bielles (31, 32) définissant des axes sensiblement parallèles, dites respectivement bielle supérieure (31) et bielle inférieure (32), définissant, avec ledit châssis d'une part et ladite structure porte-outil (11) d'autre part, un parallélogramme déformable,
un ressort de traction (36) pouvant prendre au moins deux positions distinctes dans ledit parallélogramme déformable pour permettre le réglage de la pression appliquée sur le sol par ledit élément semeur,
comprenant une poignée (37) de réglage permettant le déplacement d'une extrémité supérieure (361) dudit ressort de traction (36) entre aux moins deux points d'ancrage (311, 312, 313, 314) définis sur ladite bielle supérieure (31), ladite poignée (37) comprenant une portion de préhension (371) et une portion de réception (372) de ladite extrémité supérieure (361) du ressort de traction (36), formant isolation entre ladite extrémité supérieure et un desdits points d'ancrage, ladite poignée (37) étant maintenue sur ledit point d'ancrage (311, 312, 313, 314) par une action de compression dudit ressort (36),
**caractérisé en ce que** ladite bielle supérieure (31) définit sensiblement un arc de cercle dont le centre de rotation se situe à proximité de l'axe orienté vers l'avant de ladite bielle inférieure (32).

2. Elément semeur selon la revendication 1, **caractérisé en ce que** ladite poignée (37) présente au moins un flanc (373) de protection apte à s'étendre sur au moins une partie de la largeur de ladite bielle supérieure (31).

3. Elément semeur selon l'une quelconque des revendications 1 et 2, **caractérisé en ce que** ladite poignée (37) est réalisée essentiellement en matière plastique.

4. Elément semeur selon l'une quelconque des revendications 1 à 3, **caractérisé en ce que** ladite extrémité supérieure (361) dudit ressort de traction (36) présente une portion rectiligne, selon l'axe dudit ressort, d'une longueur sensiblement supérieure à la largeur de ladite bielle supérieure (31).

5. Elément semeur selon l'une quelconque des revendications 1 à 4, **caractérisé en ce que** lesdits points d'ancrage (311, 312, 313, 314) sont des encoches formées dans ladite bielle supérieure (31).

6. Elément semeur selon la revendication 5, **caractérisé en ce que** ladite portion de réception (372) de la poignée (37) présente une forme extérieure complémentaire d'une desdites encoches (311, 312, 313, 314).

7. Elément semeur selon l'une quelconque des revendications 1 à 6, **caractérisé en ce que** ladite bielle inférieure (32) comprend au moins deux points d'ancrage d'une seconde extrémité dudit ressort de traction (36).

8. Elément semeur selon la revendication 7, **caractérisé en ce que** l'un desdits points d'ancrage de la seconde extrémité du ressort (36) permet un travail du ressort en soulagement.

9. Elément semeur selon l'une quelconque des revendications 1 à 8, **caractérisé en ce qu'**il est solidarisé audit châssis par une liaison pivot, le point de rotation (62) étant placé en arrière dudit parallélogramme déformable.

## Patentansprüche

1. Säelement, das dazu bestimmt ist, fest mit dem Rahmen einer Sämaschine zur Verwendung mehrerer Säelemente verbunden zu sein, wobei das Säelement eine Werkzeugtragstruktur (11) aufweist, die zumindest ein Säwerkzeug (12) trägt,
wobei die Werkzeugtragstruktur (11) mit dem Rahmen mit Hilfe von zwei Verbindungsstangen (31, 32) verbunden ist, die im Wesentlichen parallele Achsen definieren, als obere Verbindungsstange (31) bzw. untere Verbindungsstange (32) bezeichnet werden und mit dem Rahmen auf der einen Seite und der Werkzeugtragstruktur (11) auf der anderen Seite ein verformbares Parallelogramm definieren,
eine Zugfeder (36), die zumindest zwei verschiedene Positionen im verformbaren Parallelogramm einnehmen kann, um die Einstellung des durch das Säelement auf den Boden ausgeübten Drucks zu ermöglichen,
umfassend einen Einstellgriff (37), der die Verschiebung eines oberen Endes (361) der Zugfeder (36) zwischen zumindest zwei an der oberen Verbindungsstange (31) definierten Verankerungspunkten (311, 312, 313, 314) ermöglicht, wobei der Griff (37) einen Griffabschnitt (371) und einen Abschnitt (372) zum Aufnehmen des oberen Endes (361) der Zugfeder (36) umfasst, der eine Isolierung zwischen dem oberen Ende und den Verankerungspunkten ausbildet, wobei der Griff (37) durch eine Kompressionswirkung der Feder (36) am Verankerungspunkt (311, 312, 313, 314) gehalten wird,
**dadurch gekennzeichnet, dass** die obere Verbindungsstange (31) im Wesentlichen einen Kreisbogen definiert, dessen Drehzentrum sich nahe der nach vorn gerichteten Achse der unteren Verbindungsstange (32) befindet.

2. Säelement nach Anspruch 1, **dadurch gekennzeichnet, dass** der Griff (37) zumindest eine Schutzflanke (373) aufweist, die sich über zumindest einen Teil der Breite der oberen Verbindungsstange (31) erstrecken kann.

3. Säelement nach einem der Ansprüche 1 und 2, **dadurch gekennzeichnet, dass** der Griff (37) im Wesentlichen aus Kunststoff hergestellt ist.

4. Säelement nach einem der Ansprüche 1 bis 3, **dadurch gekennzeichnet, dass** das obere Ende (361) der Zugfeder (36) einen geradlinigen Abschnitt entlang der Federachse aufweist, dessen Länge im Wesentlichen größer als die Breite der oberen Verbindungsstange (31) ist.

5. Säelement nach einem der Ansprüche 1 bis 4, **dadurch gekennzeichnet, dass** die Verankerungspunkte (311, 312, 313, 314) Kerben sind, die in der oberen Verbindungsstange (31) ausgebildet sind.

6. Säelement nach Anspruch 5, **dadurch gekennzeichnet, dass** der Aufnahmeabschnitt (372) des Griffs (37) eine äußere Form aufweist, die komplementär zu einer der Kerben (311, 312, 313, 314) ist.

7. Säelement nach einem der Ansprüche 1 bis 6, **dadurch gekennzeichnet, dass** die untere Verbindungsstange (32) zumindest zwei Punkte zur Verankerung eines zweiten Endes der Zugfeder (36) umfasst.

8. Säelement nach Anspruch 7, **dadurch gekennzeichnet, dass** einer der Verankerungspunkte des zweiten Endes der Feder (36) eine Entlastungsarbeit der Feder ermöglicht.

9. Säelement nach einem der Ansprüche 1 bis 8, **dadurch gekennzeichnet, dass** es durch eine Schwenkverbindung fest mit dem Rahmen verbunden ist, wobei der Drehpunkt (62) hinter dem verformbaren Parallelogramm angeordnet ist.

## Claims

1. Seeding element, intended to be fixed to the frame of a seeder that uses a plurality of seeding elements, the said seeding element having a tool holder structure (11) carrying at least one seeding tool (12),
the said tool holder structure (11) being connected to the said frame by means of two connecting rods (31, 32) defining substantially parallel axes, referred to as the upper connecting rod (31) and the lower connecting rod (32) respectively, and defining with the said frame on the one hand and the said tool holder structure (11) on the other hand a deformable parallelogram,
a traction spring (36), which can occupy at least two different positions in the said deformable parallelogram in order to allow adjustment of the pressure applied onto the ground by the said seeding element,
comprising an adjustment handle (37) allowing the displacement of an upper end (361) of the said traction spring (36) between at least two anchoring points (311, 312, 313, 314) defined on the said upper connecting rod (31), the said handle (37) comprising a gripping portion (371) and a portion (372) for receiving the said upper end (361) of the traction spring (36), forming separation between the said upper end and one of the said anchoring points, the said handle (37) being held on the said anchoring point (311, 312, 313, 314) by an action of compression of the said spring (36),
**characterised in that** the said upper connecting rod (31) substantially defines a circle arc, the centre of rotation of which lies in the vicinity of the forward-oriented axis of the said lower connecting rod (32).

2. Seeding element according to claim 1, **characterised in that** the said handle (37) has at least one protective flank (373) capable of extending over at least a part of the width of the said upper connecting rod (31).

3. Seeding element according to either of claims 1 and 2, **characterised in that** the said handle (37) is made essentially of plastic material.

4. Seeding element according to any one of claims 1 to 3, **characterised in that** the said upper end (361) of the said traction spring (36) has a straight portion along the axis of the said spring, with a length substantially greater than the width of the said upper connecting rod (31).

5. Seeding element according to any one of claims 1 to 4, **characterised in that** the said anchoring points (311, 312, 313, 314) are notches formed in the said upper connecting rod (31) .

6. Seeding element according to claim 5, **characterised in that** the said receiving portion (372) of the handle (37) has an outlet shape complementary to one of the said notches (311, 312, 313, 314).

7. Seeding element according to any one of claims 1 to 7, **characterised in that** said lower connecting rod (32) comprises at least two points for anchoring a second end of the said traction spring (36).

8. Seeding element according to claim 7, **characterised in that** one of the said points for anchoring the second end of the spring (36) allows a releasing work of the spring.

9. Seeding element according to any one of claims 1 to 8, **characterised in that** it is fixed to the said frame by a pivot connection, the point of rotation (62) being placed behind the said deformable parallelogram.
